# EUROPÄISCHE PATENTSCHRIFT

(11) **EP 1 063 269 B1**
(45) Veröffentlichungstag und Bekanntmachung des Hinweises auf die Patenterteilung: **04.02.2004**
(21) Anmeldenummer: 00109219.6
(22) Anmeldetag: 28.04.2000
(51) Int. Cl.: C09D 175/06, C08G 18/28, C08G 18/42, C08G 18/79

(54) **Epoxidterminierte, uretdiongruppenhaltige Polyadditionsverbindungen, Verfahren zu ihrer Herstellung sowie deren Verwendung**
Epoxide terminated polyaddition compounds having uretedione groups, a process for their preparation as well as their use
Composés de polyaddition à terminaisons époxydes contenant des groupes uretdione, leur procédé de préparation et leur utilisation

(30) Priorität: 22.06.1999 DE 19928290
(43) Veröffentlichungstag der Anmeldung: 27.12.2000
(73) Patentinhaber: Degussa AG, 40474 Düsseldorf (DE)
(72) Erfinder: Wenning, Andreas, Dr., 48301 Nottuln (DE)

(56) Entgegenhaltungen:
- EP-A- 0 639 598
- EP-A- 0 652 263
- EP-A- 0 669 353
- US-A- 5 710 214

## Beschreibung

Die Erfindung betrifft epoxidterminierte, uretdiongruppenhaltige Polyadditionsverbindungen, Verfahren zu ihrer Herstellung sowie deren Verwendung zur Herstellung von Polyurethan (PUR)-Kunststoffen, insbesondere PUR-Pulverlacken, die zu hochglänzenden, licht- und wetterstabilen Lackfilmen mit verbesserter Chemikalienbeständigkeit vernetzen.

Bei Raumtemperatur feste blockierte Polyisocyanate, die Uretdiongruppen enthalten, stellen wertvolle Vernetzer für thermisch vernetzbare Polyurethan-Pulverlacke dar. So beschreibt z. B. die DE-OS 30 30 554 Polyisocyanate mit zwei endständigen, partiell oder vollständig blockierten Isocyanatgruppen. Der Nachteil dieser Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden.

Die DE-OS 30 30 539 und DE-OS 30 30 572 beschreiben Verfahren zur Herstellung von uretdiongruppenhaltigen Polyadditionsprodukten, deren terminale Isocyanatgruppen mit Monoalkoholen oder Monoaminen irreversibel verkappt sind. Nachteilig waren insbesondere die kettenabbrechenden Bestandteile der Vernetzer, die zu geringen Netzwerkdichten der PUR-Pulverbeschichtungen und damit zu mäßigen Lösemittelbeständigkeiten führten.

Hydroxylgruppenterminierte, uretdiongruppenhaltige Polyadditionsverbindungen sind Gegenstand der EP 0 669 353. Sie weisen aufgrund ihrer Funktionalität von zwei eine verbesserte Resistenz gegenüber Lösemitteln auf Für viele Anwendungen ist die Beständigkeit jedoch nicht ausreichend.

Aufgabe der vorliegenden Erfindung war es daher, blockierungsmittelfreie, uretdiongruppenhaltige Polyisocyanate bereitzustellen, um diese Vernetzer zur Herstellung abspaltfreier PUR-Kunststoffe, insbesondere von ökologisch wertvollen PUR-Pulverlacken, zu verwenden, wobei die danach hergestellten PUR-Pulverlackbeschichtungen die genannten Nachteile des Standes der Technik nicht mehr aufweisen.

Die Aufgabe wurde gemäß den Patentansprüchen gelöst.

Gegenstand der vorliegenden Erfindung sind demnach epoxidterminierte, uretdiongruppenhaltige Polyadditionsverbindungen, erhältlich durch Umsetzung von
A) 40 - 84,5 Gew.-% mindestens einer Polyisocyanatkomponente, die aufgebaut ist aus
   1) mindestens 40 Gew.-% einer Uretdiongruppen aufweisenden Polyisocyanatverbindung mit einer mittleren Funktionalität von mindestens 2,0 und
   2) höchstens 60 Gew.-% mindestens einer Düsocyanatverbindung und/oder Isocyanuratverbindung ohne Uretdiongruppen;
B) 50 - 15 Gew.-% mindestens einer Verbindung mit mindestens zwei Hydroxylgruppen;
C) 10 - 0,5 Gew.-% mindestens einer Verbindung mit mindestens einer Epoxidgruppe und mindestens einer anderen gegenüber Isocyanatgruppen reaktiven funktionellen Gruppe;
wobei die Polyadditionsverbindungen unterhalb von 40 °C in fester und oberhalb von 130 °C in flüssiger Form vorliegen, zahlenmittlere Molmassen zwischen 1 000 und 15 000 und einen Gehalt an freien Isocyanatgruppen (berechnet als NCO; Molekulargewicht = 42) von 0 bis 2 Gew.-% aufweisen.

Gegenstand der Erfindung ist auch ein Verfahren zur Herstellung von epoxidterminierten, uretdiongruppenhaltigen Polyadditionsverbindungen durch Umsetzung von
A) 40 - 84,5 Gew.-% mindestens einer Polyisocyanatkomponente, die aufgebaut ist aus
   1) mindestens 40 Gew.-% einer Uretdiongruppen aufweisenden Polyisocyanatverbindung mit einer mittleren Funktionalität von mindestens 2,0
      und
   2) höchstens 60 Gew.-% mindestens einer Düsocyanatverbindung und/oder Isocyanuratverbindung ohne Uretdiongruppen;
B) 50 - 15 Gew.-% mindestens einer Verbindung mit mindestens zwei Hydroxylgruppen;
C) 10 - 0,5 Gew.-% mindestens einer Verbindung mit mindestens einer Epoxidgruppe und mindestens einer anderen gegenüber Isocyanatgruppen reaktiven funktionellen Gruppe;
wobei die Polyadditionsverbindungen unterhalb von 40 °C in fester und oberhalb von 130 °C in flüssiger Form vorliegen, zahlenmittlere Molmassen zwischen 1 000 und 15 000 und einen Gehalt an freien Isocyanatgruppen (berechnet als NCO; Molekulargewicht = 42) von 0 bis 2 Gew.-% aufweisen, in einem Lösemittel bei 50 - 100 °C oder ohne Lösemittel in einem Intensivkneter bei 110 - 190 °C.

Gegenstand der Erfindung ist auch die Verwendung Polyadditionsverbindungen zur Herstellung von PUR-Kunststoffen, insbesondere in Kombination mit hydroxylgruppenhaltigen Polymeren sowie den in der PUR-Chemie üblichen Zuschlagstoffen, in abspaltfreien, transparenten und pigmentierten PUR-Pulverlacken erhöhter Netzwerkdichte, sehr guter Reaktivität und ausgezeichnetem Glanz sowie abspaltfreie, transparente und pigmentierte PUR-Pulverlacke, welche die erfindungsgemäßen Polyadditionsverbindungen enthalten.

Die erfindungsgemäß eingesetzten Uretdiongruppen aufweisenden Polyisocyanatverbindüngen A1) werden aus beliebigen Diisocyanaten durch katalytische Dimeri--sierung der Isocyanatgruppen erhalten. Bei den beliebigen Düisocyanaten zur Herstellung von A1) handelt es sich um aliphatische, cycloaliphatische, araliphatische und/oder aromatische Diisocyanate. Bevorzugte Beispiele sind 1,6-Diisocyanatohexan (HDI), 2-Methylpentamethylendiisocyanat-1,5 (DI 51), 2,2,4 (2,4,4)-Trimethylhexamethylendiisocyanat, 4,4'-Diisocyanatodicyclohexyl-methan, 1,3- und 1,4-Diisocyanatocyclohexan, Isophorondiisocyanat (IPDI), Diphenylmethan-2,4' und/oder -4,4'-diisocyanat, Xylylendiisocyanat oder 2,4- und 2,6-Toluylendiisocyanat sowie beliebige Gemische dieser Isomeren, wobei diese Diisocyanate allein oder in Mischungen zur Herstellung der Komponente A1) eingesetzt werden können. Auch die Uretdiongruppen aufweisenden Polyisocyanatverbindungen A1) sind beliebig untereinander mischbar und im Sinne der Erfindung für die Komponente A) einsetzbar.

Als Katalysatoren zur Herstellung der Komponente A1) aus den genannten Diisocyanaten sind grundsätzlich alle bekannten, die Dimerisierung von Isocyanatgruppen katalysierenden Verbindungen geeignet. Beispiele sind tertiäre organische Phosphine (US-PS 4 614 785, DE-OS 19 34 763 und 39 00 053), Tris-(dialkylamino)-phosphine (DE-OS 30 30 513, 32 27 779 und 34 37 635), substituierte Pyridine (DE-OS 10 81 895 und 37 39 549) und substituierte Imidazole oder Benzimidazole (EP 0 417 603).

Bevorzugte Polyisocyanatverbindungen A1) sind Uretdiongruppen aufweisende Polyisocyanate, die aus Diisocyanaten mit aliphatisch und/oder cycloaliphatisch gebundenen Isocyanatgruppen hergestellt sind.

Besonders bevorzugt werden die Uretdione des Isophorondiisocyanats (IPDI) und des 1,6-Diisocyanatohexan (HDI) verwendet.

Das isocyanuratfreie Uretdion des Isophorondiisocyanats ist bei Raumtemperatur hochviskos und größer als 10⁶ mPa·s, bei 60 °C liegt die Viskosität bei 13·10³ mPa·s und bei 80 °C bei 1,4·10³ mPa·s. Der freie NCO-Gehalt liegt zwischen 16,8 und 18,5 Gew.-%, d. h. daß mehr oder minder hohe Anteile an Polyuretdion des IPDI im Reaktionsprodukt vorliegen müssen. Der Monomergehalt liegt bei 1 Gew.-%. Der Gesamt-NCO-Gehalt des Reaktionsproduktes nach dem Erhitzen auf 180 - 200 °C beträgt 37,5 - 37,8 Gew.-%.

Während der Dimerisierung von aliphatischen Diisocyanaten bei an sich bekannten Verfahren und Katalysatoren bildet sich als Nebenprodukt Isocyanurat in unterschiedlichen Mengen, so daß die NCO-Funktionalität der eingesetzten Polyisocyanatverbindungen A1) mindestens 2 beträgt..

Bei den Diisocyanaten A2) handelt es sich um die oben angegebenen, zur Herstellung der Komponente A1) geeigneten Diisocyanate. Sie können bis zu 60 Gew.-%, bezogen auf das Gesamtgewicht der Komponente A1) und A2) ausmachen Geeignete Gemische sind z. B. auch Lösungen von Uretdionen in Diisocyanaten, wie sie nach katalytischer Dimerisierung und ohne Abtrennung des nicht umgesetzten Diisocyanates erhalten werden.

Bei den Isocyanuraten A2) handelt es sich um die Trimeren der Diisocyanate, die auch zur Herstellung der Uretdiongruppen aufweisenden Polyisocyanatverbindungen A1) verwendet werden. Die Isocyanurate können separat der Polyisocyanatverbindung A1) zugegeben werden, oder sie sind bereits Bestandteil der Polyisocyanatverbindung A1), da sie teilweise bei der Dimerisierung von Diisocyanaten als Nebenprodukt gebildet werden.

Als Verbindungen B) eignen sich alle in der PUR-Chemie üblicherweise eingesetzten Diole des Molekulargewichtes von mindestens 62. Beispielhaft genannt seien Ethylenglykol, Triethylenglykol, Butandiol-1,4, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester. Sie werden allein oder in Mischungen verwendet.

Als Verbindungen B) eignen sich auch Diole, die weitere funktionelle Gruppen enthalten. Hierbei handelt es sich um die an sich bekannten linearen hydroxylgruppenhaltigen Polyester, Polycarbonate, Polycaprolactone, Polyether, Polythioether, Polyesteramide, Polyurethane oder Polyacetale. Sie weisen vorzugsweise ein zahlenmittleres Molekulargewicht von 134 bis 3 500 auf. Bevorzugte sind lineare hydroxylgruppenhaltige Polyester - Polyesterpolyole - oder Gemische solcher Polyester. Sie werden z. B. durch Umsetzung von Diolen mit unterschüssigen Mengen an Dicarbonsäuren, entsprechenden Dicarbonsäureanhydriden, entsprechenden Dicarbonsäureestern von niederen Alkoholen, Lactonen oder Hydroxycarbonsäuren hergestellt.

Zur Herstellung der Polyesterpolyole geeignete Diole sind neben den oben genannten Diolen auch 2-Methylpropandiol, 2,2-Dimethylpropandiol, Diethylenglykol, Dodecandiol-1,12, 1,4-Cyclohexandimethanol und 1,2- und 1,4-Cyclohexandiol.

Zur Herstellung der Polyesterpolyole geeignete Dicarbonsäuren oder Derivate können aliphatischer, cycloaliphatischer, aromatischer und/oder heteroaromatischer Natur sein und gegebenenfalls, z. B. durch Halogenatome, substituiert und/oder ungesättigt sein.

Zu den bevorzugten Dicarbonsäuren oder Derivaten zählen Bernstein-, Adipin-, Kork-, Azelain- und Sebacinsäure, 2,2,4 (2,4,4)-Trimethyladipinsäure, Phthalsäure, Phthalsäureanhydrid, Isophthalsäure, Terephthalsäure, Terephthalsäuredimethylester, Tetrahydrophthalsäure, Maleinsäure, Maleinsäureanhydrid und dimere Fettsäuren.

Geeignete Polyesterpolyole sind auch solche, die sich in bekannter Weise durch Ringöffnung aus Lactonen wie ε-Caprolacton und einfachen Diolen als Startermolekülen herstellen lassen.

Die zur Herstellung der Polyesterpolyole verwendeten Diole und Dicarbonsäuren bzw. deren Derivate können in beliebigen Mischungen eingesetzt werden.

Verbindungen C) sind solche, die neben einer Epoxidgruppe noch mindestens eine weitere funktionelle Gruppe tragen, wie zum Beispiel Carboxyl-, Hydroxyl-, Mercapto- oder Aminogruppen, die zur Reaktion mit einer Isocyanatgruppe befähigt ist. Besonders bevorzugt sind 2,3-Epoxy-1-propanol und epoxidiertes Sojaöl.

Die erfindungsgemäßen Polyadditionsverbindungen werden gemäß dem oben genannten allgemeinen Verfahren hergestellt. Dieses kann, je nach Art der eingesetzten Komponenten, entsprechend der folgenden angegebenen Weise variiert werden.

Die Umsetzung in Lösemitteln erfolgt im allgemeinen bei Temperaturen von 50 bis 100 °C, vorzugsweise zwischen 60 und 90 °C, wobei auch Katalysatoren eingesetzt werden können. Die Polyisocyanatkomponente A) wird vorgelegt und die Hydroxylgruppen tragende Komponente B) so rasch wie möglich zugesetzt, ohne daß die Reaktionstemperatur die o. g. Grenzen überschreitet. Danach wird die Komponente C) zugegeben. Alternativ kann auch erst die Umsetzung der Komponente A) mit der Komponente C) erfolgen, woran sich die Umsetzung mit der Komponente B) anschließt. Eine weitere Möglichkeit besteht darin, die Komponenten B) und C) als Gemisch zur Komponente A) zuzugeben. Das Gemisch aus B) und C) kann auch vorgelegt und A) zugegeben werden. Nach erfolgter Umsetzung wird das Lösemittel entfernt. Dazu geeignet sind Abdampfschnecken, Filmextruder oder auch Sprühtrockner.

Geeignete Lösemittel sind Benzol, Toluol oder andere aromatische bzw. aliphatische Kohlenwasserstoffe, Essigester wie Ethyl- oder Butylacetat, auch Ketone wie Aceton, Methylethylketon, Methylisobutylketon oder chlorierte aromatische und aliphatische Kohlenwasserstoffe sowie beliebige Gemische dieser oder anderer inerter Lösemittel.

Ein weiterer Gegenstand der Erfindung ist die lösemittelfreie und kontinuierliche Herstellung der erfindungsgemäßen Polyadditionsverbindungen mittels Intensivkneter. Bevorzugt erfolgt die Herstellung in einem Ein- oder Mehrschneckenextruder, insbesondere in einem Zweiwellenextruder. Die lösemittelfreie Synthese erfordert Temperaturen von 110 bis 190 °C. Überraschend war, daß derart hohe Temperaturen zur Anwendung kommen können. Diese Temperaturen liegen bereits deutlich im Abspaltbereich für Uretdione, so daß hohe freie Isocyanatgehalte resultieren können und damit unkontrollierte Reaktionsabläufe zu erwarten wären. Diese Tatsache war für die hydroxylgruppenhaltige Uretdion-Polyadditionsprodukt-Synthese bedeutungsvoll, und um so überraschender war es, daß sie realisiert werden konnte. Als vorteilhaft erwiesen sich dabei die kurzen Reaktionszeiten von weniger als 5 Minuten, vorzugsweise weniger als 3 Minuten, insbesondere weniger als 2 Minuten.

Es war nicht vorhersehbar, daß die kurzzeitige thermische Behandlung ausreicht, um die Reaktionspartner homogen zu mischen und dabei vollständig oder weitgehend umzusetzen. Anschließend wird entsprechend der Gleichgewichtseinstellung gezielt abgekühlt und, falls erforderlich, der Umsatz vervollständigt.

Die Umsetzungsprodukte werden dem Reaktionskneter in getrennten Produktströmen zugeführt, wobei die Ausgangskomponenten bis auf 120 °C, vorzugsweise bis 90 °C, vorgewärmt werden können. Handelt es sich um mehr als zwei Produktströme, können diese auch gebündelt zudosiert werden.

Die Komponenten B) und/oder C), Verlaufmittel oder Stabilisatoren können zu einem Produktstrom zusammengefaßt werden; ebenso die, die gegenüber Isocyanatgruppen inert sind: Katalysatoren sowie entsprechend oben genannte Zuschlagsstoffe.

Ebenfalls kann die Reihenfolge der Produktströme variabel gehandhabt werden sowie die Eintrittsstelle für die Produktströme unterschiedlich sein.

Zur Nachreaktion, Abkühlung, Zerkleinerung und Absackung werden bekannte Verfahren und Technologien verwendet.

Zur Beschleunigung der Polyadditionsreaktion können auch die in der PUR-Chemie üblichen Katalysatoren verwendet werden. Sie werden in einer Konzentration von 0,01 bis 2 Gew.-%, vorzugsweise von 0,03 bis 0,5 Gew.-%, bezogen auf die eingesetzten Reaktionskomponenten, eingesetzt. Katalysatoren sind beispielsweise tert. Amine wie Triethylamin, Pyridin oder N,N-Dimethylaminocyclohexan oder Metallsalze wie Eisen(III)-chlorid, Molybdänglykolat und Zinkchlorid. Als besonders geeignet erwiesen sich Zinn-II- und -IV-Verbindungen. Genannt seien hier besonders Dibutylzinndilaurat (DBTL) und Zinnoctoat erwähnt.

Die erfindungsgemäßen Polyadditionsverbindungen eignen sich hervorragend zur Herstellung von Polyurethan-Kunststoffen, insbesondere in Kombination mit hydroxylgruppenhaltigen Polymeren und/oder den in der PUR-Chemie üblichen Zuschlagsstoffen zur Herstellung von abspaltfreien, transparenten und pigmentierten PUR-Pulverlacken, die sich durch sehr gute Reaktivität auszeichnen und damit ökonomisch wie ökologisch bedeutungsvoll sind und überraschenderweise trotz gesteigerter Netzwerkdichte eine ausgezeichnete Flexibilität aufweisen.

Gegenstand der vorliegenden Erfindung sind Polyurethan-Kunststoffe und insbesondere abspaltfreie PUR-Pulverlacke.

Die PUR-Pulverlacke enthalten im wesentlichen die erfindungsgemäßen Polyadditionsverbindungen in Kombination mit hydroxylgruppenhaltigen Polymeren. Als Reaktiönspartner- für PUR-Pulverlacke kommen Verbindungen in Frage, welche solche funktionelle Gruppen tragen, die sich mit Isocyanatgruppen während des Härtungsprozesses in Abhängigkeit von der Temperatur und Zeit umsetzen, z. B. Hydroxyl-, Carboxyl-, Mercapto-, Amino-, Urethan-, (Thio)Harnstoffgruppen. Als Polymere können Polymerisate, Polykondensate und Polyadditionsverbindungen eingesetzt werden.

Grundsätzlich kann jedes Polymer verwendet werden, welches mehr als zwei OH-Gruppen enthält und bei mindestens 70 °C schmilzt. Es sind dies Polyesterpolyole, Polyetherpolyole, Polyesteramidpolyole, Polyurethanpolyole, hydroxylierte Acrylatharze, Epoxidharze mit Hydroxylgruppen im Molekül, Aminoplasten und ihre Modifizierungsprodukte mit polyfunktionellen Alkoholen, Polyazomethine, Polysulfonamide, Melaminabkömmlinge, Celluloseester und -ether, deren OH-Gruppen für die Vernetzung mit den erfindungsgemäßen Polyadditionsverbindungen bestimmt sind.

Besonders bevorzugt sind unter den zahlreichen Möglichkeiten für Hydroxylgruppen tragende Polymere im Rahmen der Erfindung Polyesterpolyole und hydroxylierte Acrylatharze.

Für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, Malein- und Fumarsäure bzw. - soweit zugänglich - deren Anhydride, Terephthalsäuredimethylester, Terephthalsäure-bisglykolester, weiterhin cyclische Monocarbonsäure wie Benzoesäure, p-tert.-Butylbenzoesäure oder Hexahydrobenzoesäure.

Als mehrwertige Alkohole kommen z. B. Ethylenglykol, Propylenglykol-1,2 und - 1,3, Butylenglykol-1,4 und -2,3, Di-β-hydroxyethylbutandiol, Hexandiol-1,6, Octandiol-1,8, Neopentylglykol, Cyclohexandiol, Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methylpentandiol-1,5, 2,2,4 (2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, infrage.

Auch die folgenden Mono- und Polyester sind prinzipiell einsetzbar:

Polyester aus Lactonen, z. B. ε-Caprolacton, oder aus Hydroxycarbonsäuren, z. B. Hydroxypivalinsäure, α-Hydroxydecansäure, α-Hydroxycapronsäure, Thioglykolsäure; Polyester aus den obengenannten Polycarbonsäuren oder deren Derivaten und Polyphenolen, wie Hydrochinon, Bisphenol-A, 4,4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1,6 und anderen Polyolen durch übliche Kondensationsreaktionen, z. B. mit Phosgen oder Diethyl- bzw. Diphenylcarbonat, oder aus cyclischen Carbonaten wie Glykolcarbonat oder Vinylidencarbonat, durch Polymerisation in bekannter Weise erhältlich sind; Polyester der Kieselsäure; Polyester der Phosphorsäure; Polyester der Borsäure.

Bevorzugte Polyester sind z. B. auch die Reaktionsprodukte von Polycarbonsäuren und Glycidylverbindungen, wie sie z. B. in der DE-OS 24 10 513 beschrieben sind.

Die besonders bevorzugt eingesetzten hydroxylgruppenhaltigen Polyester haben eine OH-Funktionalität von > 2, eine OH-Zahl von 20 bis 200 mg KOH/g, vorzugsweise 30 bis 150 mg KOH/g, eine Viskosität von < 60 000-mPa·s, vorzugsweise < 40 000 mPa·s, bei 140 °C und einen Schmelzpunkt von > 70 bis 120 °C, vorzugsweise 75 bis 100 °C, aufzuweisen.

Beispiele für Glycidylverbindungen, die verwendet werden können, sind Ester des 2,3-Epoxy-1-propanols mit monobasischen Säuren, die 4 bis 18 Kohlenstoffatome haben, wie Glycidylpalmitat, Glycidyllaurat und Gylcidylstearat, Alkylenoxide mit 4 bis 18 Kohlenstoffatomen, wie Butylenoxid und Glycidylether, wie Octylglycidylether.

Als Dicarbonsäuren können bei diesem Verfahren sämtliche unter II im folgenden aufgeführte Polycarbonsäuren verwendet werden, Monocarbonsäuren, welche beispielsweise unter III aufgeführt sind, können ebenfalls eingesetzt werden.

Bevorzugte Komponenten sind auch monomere Ester, z. B. Dicarbonsäure-bis-(hydroxy(alkohol)ester, Monocarbonsäureester von mehr als zweiwertigen Polyolen und Oligoester, die durch Kondensationsreaktionen aus in der Lackchemie üblichen Rohstoffen hergestellt werden können. Als solche sind z. B. anzusehen:
I. Alkohole mit 2 bis 24, vorzugsweise 2 bis 10 C-Atomen, und 2 bis 6 an nichtaromatischen C-Atomen gebundenen OH-Gruppen, z. B. Ethylenglykol, Propylenglykol, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit;
II. Di- und Polycarbonsäuren mit 4 bis 36 C-Atomen und 2 bis 4 Carboxylgruppen sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäuren, Trimellithsäure, Pyromellitsäure, Azelainsäure;
III. Monocarbonsäuren mit 6 bis 24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosfettsäure, Sojaölfettsäure, Ricinenfettsäure, hydrierte und isomerisierte Fettsäuren, wie "Konjuvandol"-Fettsäure sowie deren Gemische, wobei die Fettsäuren auch als Glyceride einsetzbar sind und unter Umesterung und/oder Dehydratisierung umgesetzt werden können.;
IV. einwertige Alkohole mit 1 bis 18 C-Atomen, z. B. Methanol, Ethanol, Isopropanol, Cyclohexanol, Benzylalkohol, Isodecanol, Nonanol, Octanol, Oleylalkohol.

Solche Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es in Methoden der Organischen Chemie (Houben-Weyl), Bd. 14/2, 1 - 5, 21 - 23, 40 - 44, Georg Thieme Verlag, Stuttgart, 1963 oder bei C. R. Martens, Alkyl Resins, 51 - 59, Reinhold Plastics Appl. Series, Reinhold Publishing Comp., New York und in den DE-OS 19 57 483, 25 42 191, 30 04 876 und 31 43 060 beschrieben wird.

Bevorzugte Acrylatharze, welche als OH-Komponente verwendet werden können, sind Homo- oder Copolymerisate, wobei z. B. folgende Monomere als Ausgangsprodukte gewählt werden können: Ester der Acrylsäure und Methacrylsäure mit zweiwertigen, gesättigten, aliphatischen Alkoholen mit 2 bis 4 C-Atomen, wie z. B. 2-Hydroxyethylacrylat, 2-Hydroxypropylacrylat, 4-Hydroxybutylacrylat und die entsprechenden Methacrylsäureester; Acrylsäure- und Methacrylsäurealkylester mit 1 bis 18 C-Atomen in der Alkoholkomponente, wie z. B. Methacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylsäureester; Acrylsäure- und Methacrylsäurecyclohexylester; Acrylnitril und Methacrylnitril, Acrylamid und Methacrylamid; N-Methoxymethyl(meth)acrylsäureamid.

Besonders bevorzugte Acrylharze sind Copolymere aus
a. 0 bis 50 Gew.-% Ester der Acryl- oder Methacrylsäure mit zwei- oder mehrwertigen Alkoholen, wie Butandiol-(1,4)-monoacrylat, Hydroxypropyl(meth)acrylat; ferner Vinylglykol, Vinylthioethanol, Allylalkohol, Butandiol-1,4-monovinylether;
b. 5 bis 95 Gew.-% Ester der Acrylsäure oder Methacrylsäure mit einwertigen Alkoholen, die 1 bis 12 Kohlenstoffatome enthalten, wie z. B. Methylmethacrylat, Ethylacrylat, n-Butylacrylat oder 2-Ethylhexylacrylat;
c. 0 bis 50 Gew.-% aromatische Vinylverbindungen, wie Styrol, Methylstyrol oder Vinyltoluol;
d. 0 bis 20 Gew.-% andere Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol(meth)acrylamid sowie Glycidyl(meth)acrylat, wobei der Anteil der Gruppe a. und/oder b. mindestens 5 Gew.-% betragen. Die Acrylatharze können nach den üblichen Methoden hergestellt werden, also durch Lösungs-, Suspensions-, Emulsions-oder Fällungspolymerisation; bevorzugt aber durch Substanzpolymerisation, die ihrerseits mittels UV-Licht initiiert werden kann. Als weitere Polymerisationsinitiatoren werden die üblichen Peroxide oder Azoverbindungen, wie z. B. Dibenzoylperoxid, tert.-Butylperbenzoat oder Azodiisobutyronitril verwendet. Das Molekulargewicht kann z. B. mit Schwefelverbindungen, wie tert.-Dodecylmercaptan, geregelt werden.

Die so hergestellten hydroxylgruppenhaltigen Polyacrylate haben eine OH-Zahl von 20 bis 150 mg KOH/g, vorzugsweise 25 bis 100 mg KOH/g.

Das Mischungsverhältnis der hydroxylgruppenhaltigen Polymeren und den erfindungsgemäßen Polyadditionsverbindungen wird in der Regel so gewählt, daß auf eine OH-Gruppe 0,5 - 1,2, bevorzugt 0,8 - 1,1, ganz bevorzugt 1,0 NCO-Gruppe kommt.

Um die Geliergeschwindigkeit der hitzehärtbaren Pulverlacke zu erhöhen, kann man Katalysatoren zusetzen. Als Katalysatoren verwendet man Organozinnverbindungen wie Dibutylzinndilaurat (DBTL), Sn(II)-octoat, Dibutylzinnmaleat usw. Die Menge an zugesetztem Katalysator beträgt 0,1 - 5 Gew.-T. auf 100 Gew.-T. des Hydroxylgruppen tragen- den Polyesters.

Die Isocyanatkomponente wird für die Herstellung von PUR-Pulverlacken mit dem geeigneten hydroxylgruppenhaltigen Polymeren und gegebenenfalls Katalysatoren sowie Pigmenten und üblichen Hilfsmitteln wie Füllstoffen und Verlaufsmitteln, z. B. Siliconöl, Acrylatharzen, gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver . vermahlen. Das Auftragen des sprühfertigen Pulvers auf geeignete Substrate kann nach den bekannten Verfahren, wie z. B. durch elektrostatisches Pulversprühen, Wirbelsintern oder elektrostatisches Wirbelsintern erfolgen. Nach dem Pulverauftrag werden die beschichteten Werkstücke zur Aushärtung 60 bis 4 Minuten auf eine Temperatur von 150 bis 220 °C, vorzugsweise 30 bis 6 Minuten bei 160 bis 200 °C, erhitzt.

Nachfolgend wird der Gegenstand der Erfindung anhand von Beispielen näher erläutert.

### Beispiele

### A Herstellung der erfindungsgemäßen Polyadditionsverbindungen

### A 1 Polyol-Kettenverlängerer

### Allgemeine Herstellungsvorschrift

Die Ausgangskomponenten - vgl. Tabellen 1 und 2 werden in einen Reaktor gegeben und mit Hilfe eines Ölbades auf 140 °C erhitzt. Nachdem die Stoffe zum größten Teil geschmolzen sind, werden 0,1 Gew.-% Di-n-butylzinnoxid als Katalysator zugesetzt. Die erste Wasserabspaltung tritt bei 150 bis 160 °C auf Innerhalb von 2 bis 3 Stunden wird die Temperatur auf 180 bis 190 °C erhöht und die Veresterung während weiteren 8 bis 10 Stunden zu Ende gebracht. Während der gesamten Reaktionszeit wird das Sumpfprodukt gerührt und ein schwacher Stickstoffstrom durch das Reaktionsprodukt geleitet. Die Säurezahl der Polyester lag stets < 5 mg KOH/g.

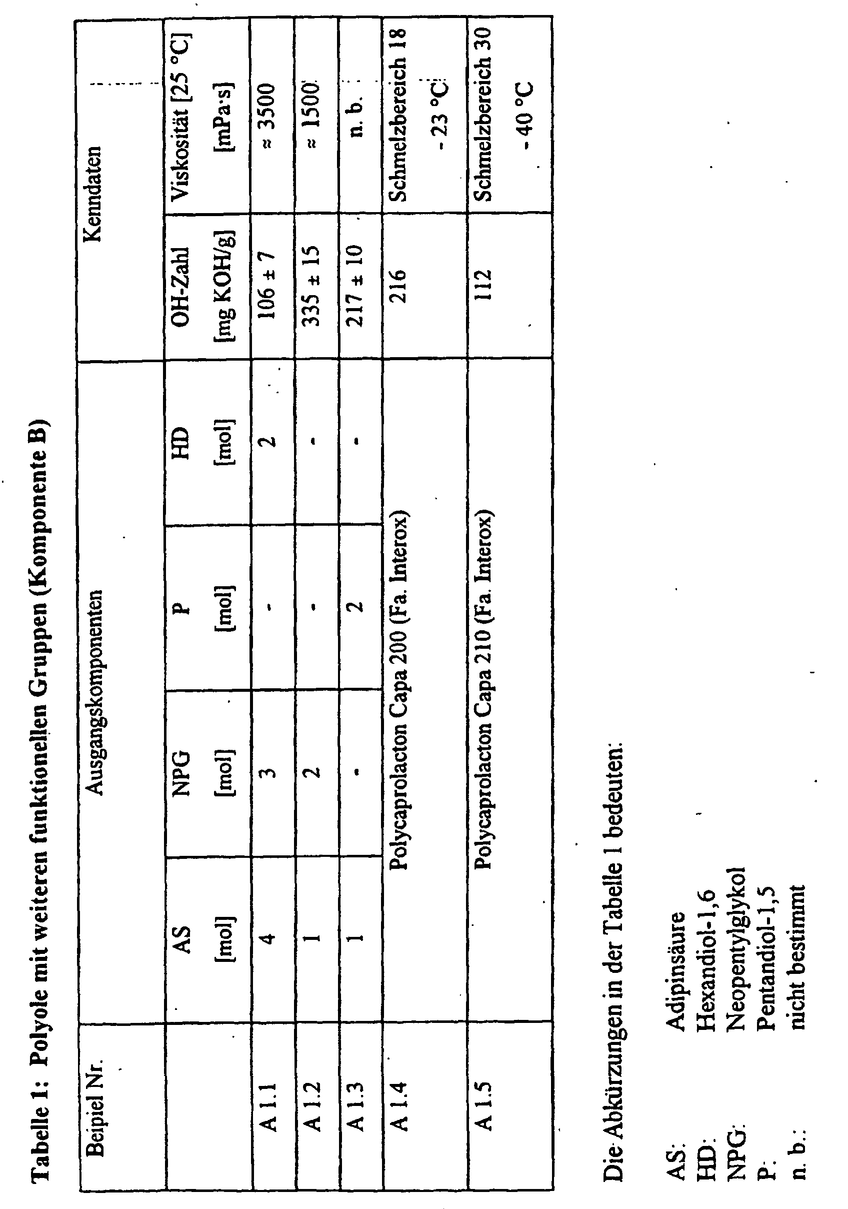

### A 2 Epoxidterminierte und uretdiongruppenhaltige Polyadditionsverbindungen

### Allgemeine Herstellungsvorschriften

### A 2.1 Aus Lösemittel

Die Komponenten B) und C) und der Katalysator (Dibutylzinndilaurat) werden in einem Reaktor vorgelegt und in einem Lösemittel gelöst. Unter starkem Rühren und Inertgasatmosphäre wird die berechnete Menge des Uretdions (Komponente A)), gelöst in einem Lösemittel so schnell zugesetzt, daß die Reaktionstemperatur 100 °C nicht übersteigt. Die Umsetzung wird mittels titrimetrischer NCO-Bestimmung kontrolliert und ist nach 1 bis 3 Stunden beendet. Danach wird das Lösemittel entfernt, das Produkt abgekühlt und ggf. zerkleinert.

### A 2.2 Lösemittelfrei

In die Einzugsgehäuse eines Doppelschneckenextruders wurde die Komponente A) mit einer Temperatur von 60 bis 110 °C eingespeist, wobei gleichzeitig die Komponente B) und C) mit einer Temperatur von 25 bis 110 °C zudosiert wurden. Gegebenfalls wurden den Ausgangskomponenten die erforderliche Menge Katalysator zugemischt.

Der eingesetzte Extruder setzte sich aus zehn Gehäusen zusammen, davon fünf Heizzonen. Die Temperaturen der fünf Heizzonen liegen zwischen 50 und 180 °C und können einzeln gesteuert werden. Alle Temperaturen sind Soll-Temperaturen. Die Regelung in den Gehäusen erfolgt durch elektrische Heizung und pneumatische Kühlung. Das Düsenelement wir mittels Ölthermostat beheizt. Die Drehzahl der Doppelschnecke, aufgebaut mit Förderelementen, lag zwichen 50 und 380 Upm.

Das Reaktionsprodukt, das von 10 bis 130 kg/h anfällt, wird entweder abgekühlt, anschließend zerkleinert oder formiert und abgesackt, oder bereits die Schmelze wird formiert, abgekühlt und abgesackt.

Die physikalischen und chemischen Kenndaten der erfinderischen Verfahrensprodukte sowie die molaren Zusammensetzungen sind in der Tabelle 2 zusammengefaßt.

Das nach bekanntem Verfahren produzierte IPDI-Uretdion hatte folgende Kenndaten:
NCO-frei: 16,8 bis 18,5 Gew.-%
NCO-gesamt: 37,5 bis 37,8 Gew.-%

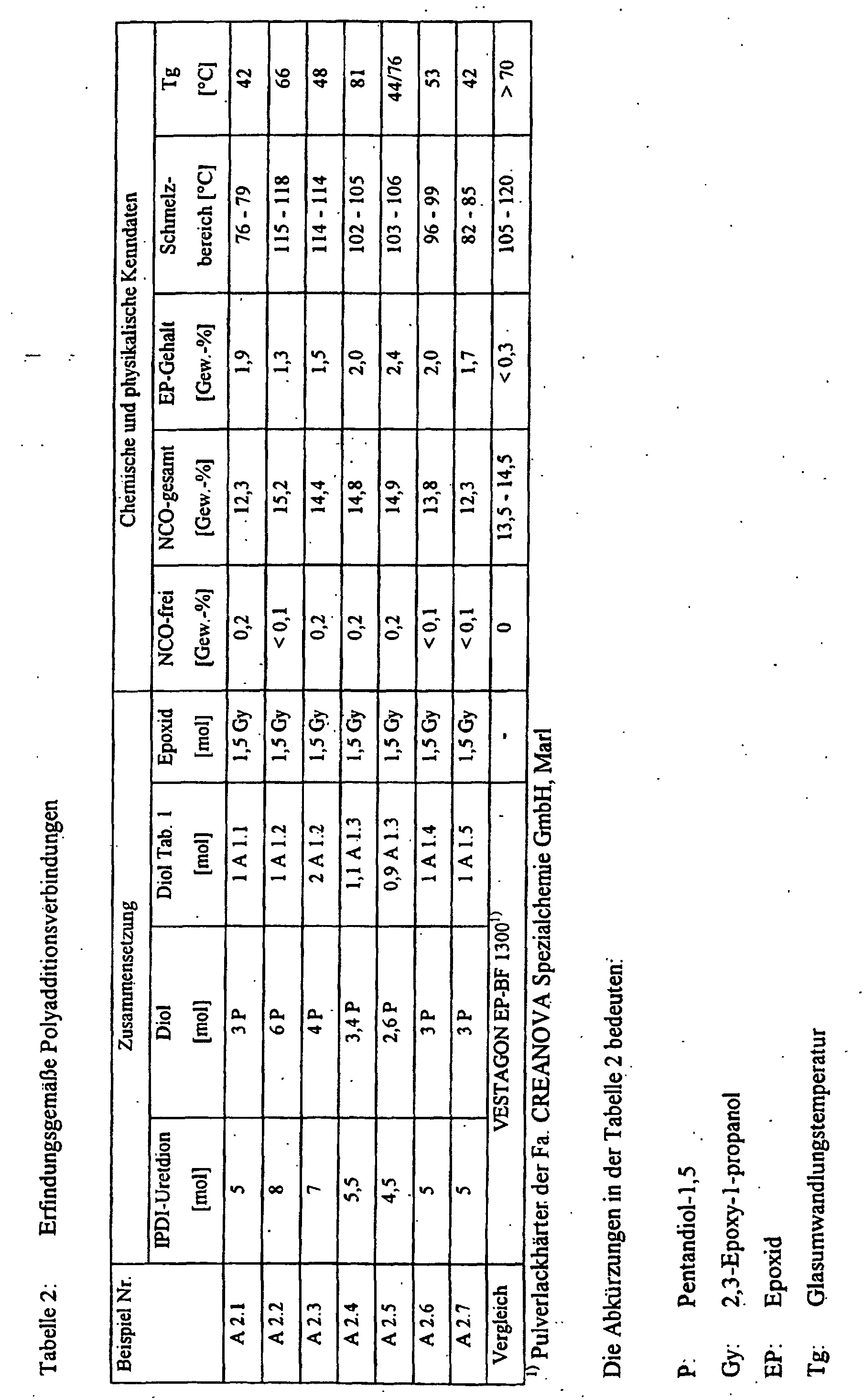

### B) Polyolkomponente

Als OH-Komponente zur Herstellung der erfindungsgemäßen PUR-Pulver wurden die in der Tabelle 3 aufgeführten Polyester eingesetzt.

**Tabelle 3**

| Polyester | | | | | | | |
|---|---|---|---|---|---|---|---|
| Beispiel Nr. | Hersteller/Land | Bezeichnung | Chemische und physikalische Kenndaten | | | | |
| | | | OH-Zahl [Mg KOH/g] | Säurezahl [Mg KOH/g] | Schmelzbereich [°C] | Tg [°C] | Viskosität bei 160 °C [mPa·s] |
| B1 | Hoechst/Italien | Alftalat AN 739 | 55-60 | 2-4 | 82-90 | >50 | 24000 -29000 |
| B2 | DSM/Niederlande | Uralac P 1460 | 38-41 | 4-4,5 | 70-75 | 50 | 40000 |

### C) Polyurethan-Pulverlacke

### Allgemeine Herstellungsvorschrift

Die gemahlenen Produkte - erfindungsgemäße Polyadditionsverbindung, Polyester, Verlaufsmittel, Weißpigment werden in einem Kollergang innig vermischt und anschließend im Extruder bei 80 - 140 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei 200 °C 15 Minuten eingebrannt.

### Verlaufsmittel-Masterbatch

Es werden 10 Gew.-% des Verlaufsmittels - ein handelsübliches Butylacrylatpolymer - in dem entsprechneden Polyester in der Schmelze homogenisiert und nach dem Erstarren zerkleinert.

### Katalysator-Masterbatch

Es werden 5 Gew.-% des Katalysators Dibutylzinndilaurat (DBTL) in dem entsprechenden Polyester in der Schmelze homogenisiert und nach dem Erstarren zerkleinert.

Der Härter wurde mit dem Polyol im Verhältnis NCO OH = 1 : 1 gemischt. Zusatzstoffe waren:
40,0 Massen-% KRONOS 2160
0,5 Massen-% Verlaufsmittel
0,5 Massen-% Benzoin

Die Abkürzungen in der folgenden Tabelle 3 bedeuten:
- SD: = Schichtdicke in µm
- ET: = Tiefung nach Erichsen in mm (DIN 53 156)
- GG 60 °: = Messung des Glanzes nach Gardner (ASTM-D 523)
- KS dir.: = direkter Kugelschlag in inch·lb
- MEK: = Methylethylketon

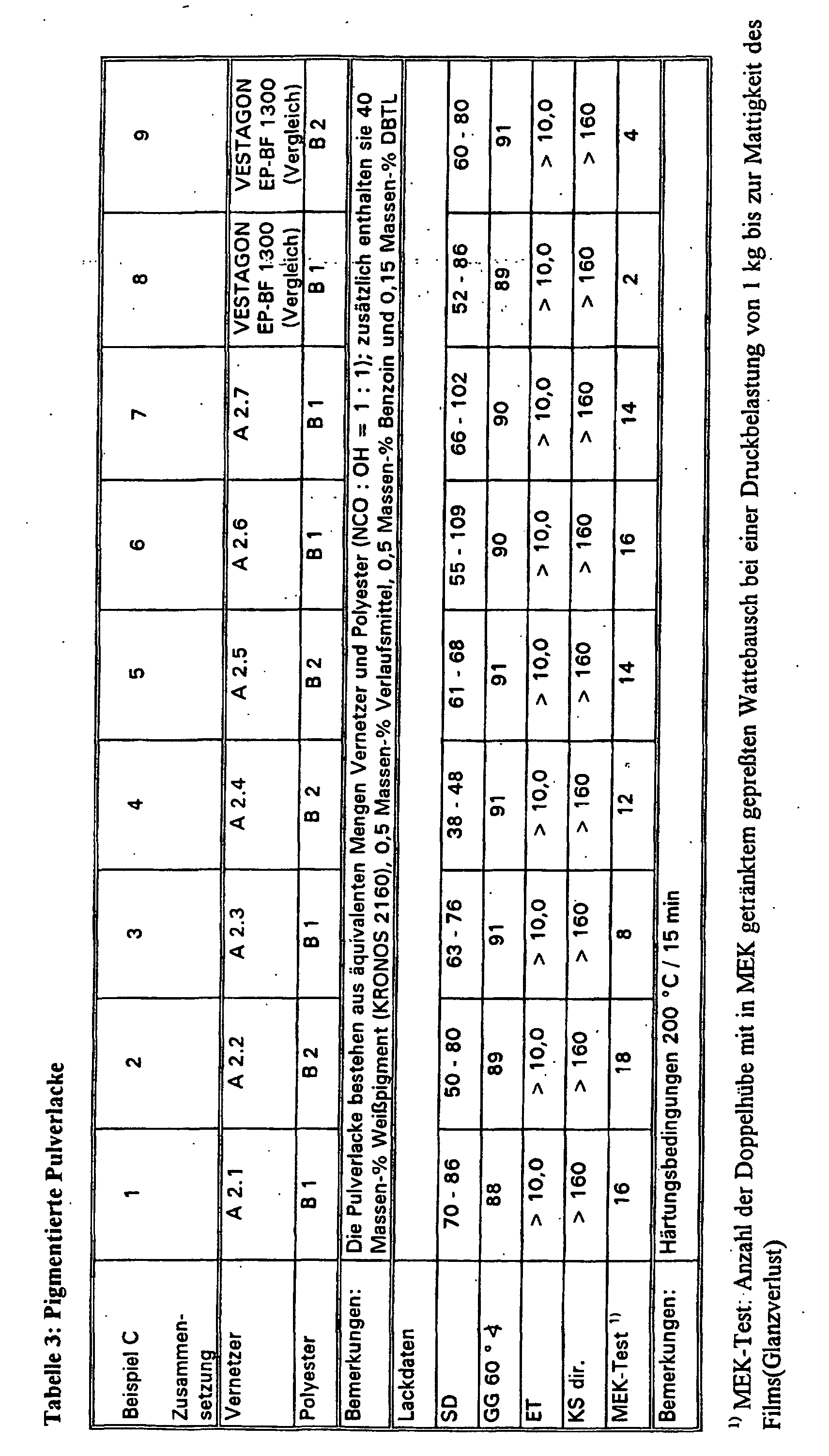

Die mit den erfindungsgemäßen Polyadditionsverbindungen hergestellten Beschichtungen sind hochglänzend und sehr flexibel. Im Vergleich zum Stand der Technik besitzen sie eine deutlich bessere Resistenz gegenüber Chemikalien wie z. B. Methylethylketon.

## Patentansprüche

1. Epoxidterminierte, uretdiongruppenhaltige Polyadditionsverbindungen, erhältlich durch Umsetzung von
A) 40 - 84,5 Gew.-% mindestens einer Polyisocyanatkomponente, die aufgebaut ist aus
1) mindestens 40 Gew.-% einer Uretdiongruppen aufweisenden Polyisocyanatverbindung mit einer mittleren Funktionalität von mindestens 2,0
und
2) höchstens 60 Gew.-% mindestens einer Diisocyanatverbindung und/oder Isocyanuratverbindung ohne Uretdiongruppen;
B) 50 - 15 Gew.-% mindestens einer Verbindung mit mindestens zwei Hydroxylgruppen;
C) 10 - 0,5 Gew.-% mindestens einer Verbindung mit mindestens einer Epoxidgruppe und mindestens einer anderen gegenüber Isocyanatgruppen reaktiven funktionellen Gruppe;
wobei die Polyadditionsverbindungen unterhalb von 40 °C in fester und oberhalb von 130 °C in flüssiger Form vorliegen, zahlenmittlere Molmassen zwischen 1 000 und 15 000 und einen Gehalt an freien Isocyanatgruppen (berechnet als NCO; Molekulargewicht = 42) von 0 bis 2 Gew.-% aufweisen.

2. Polyadditionsverbindungen nach Anspruch 1,
**dadurch gekennzeichnet,**
**daß** Uretdiongruppen aufweisende Polyisocyanatverbindungen A1), hergestellt aus 1,6-Diisocyanatohexan (HDI), 2-Methylpentamethylendiisocyanat-1,5 (DI 51), 2,2,4 (2,4,4)-Trimethylhexamethylendiisocyanat, 4,4'-Diisocyanatodicyclohexyl-methan, 1,3- und 1,4-Diisocyanatocyclohexan und Isophorondiisocyanat (IPDI), oder Gemische solcher Düsocyanate, eingesetzt werden.

3. Polyadditionsverbindungen nach mindestens einem der Ansprüche 1 bis 2,
**dadurch gekennzeichnet,**
**daß** Diisocyanate und/oder Isocyanurate A2), ausgewählt aus 1,6-Diisocyanatohexan (HDI), 2-Methylpentamethylendiisocyanat-1,5 (DI 51), 2,2,4 (2,4,4)-Trimethylhexamethylendiisocyanat, 4,4'-Diisocyanatodicyclohexylmethan, 1,3- und 1,4-Diisocyanatocyclohexan und Isophorondiisocyanat (IPDI), oder Gemische, eingesetzt werden.

4. Polyadditionsverbindungen nach mindestens einem der Ansprüche 1 bis 3,
**dadurch gekennzeichnet,**
**daß** als Verbindungen B) Diole, ausgewählt aus Ethylenglykol, Triethylenglykol, Butandiol-1,4, Pentandiol-1,5, Hexandiol-1,6, 3-Methyl-pentandiol-1,5, Neopentylglykol, 2,2,4 (2,4,4)-Trimethylhexandiol und Hydroxypivalinsäureneopentylglykolester, allein oder in Mischungen eingesetzt werden.

5. Polyadditionsverbindungen nach mindestens einem der Ansprüche 1 bis 4,
**dadurch gekennzeichnet,**
**daß** Verbindungen B), ausgewählt aus linearen hydroxylgruppenhaltigen Polyestern, Polycarbonaten, Polycaprolactonen, Polyethern, Polythioethern, Polyesteramiden, Polyurethanen oder Polyacetalen, allein oder in Mischungen, eingesetzt werden.

6. Polyadditionsverbindungen nach mindestens einem der Ansprüche 1 bis 5,
**dadurch gekennzeichnet,**
**daß** 2,3-Epoxy-1-propanol und/oder epoxidiertes Sojaöl als Komponente C) eingesetzt werden.

7. Verfahren zur Herstellung von epoxidterminierten, uretdiongruppenhaltigen Polyadditionsverbindungen durch Umsetzung von
A) 40 - 84,5 Gew.-% mindestens einer Polyisocyanatkomponente, die aufgebaut ist aus
1) mindestens 40 Gew.-% einer Uretdiongruppen aufweisenden Polyisocyanatverbindung mit einer mittleren Funktionalität von mindestens 2,0
und
2) höchstens 60 Gew.-% mindestens einer Düsocyanatverbindung und/oder Isocyanuratverbindung;
B) 50 - 15 Gew.-% mindestens einer Verbindung mit mindestens zwei Hydroxylgruppen;
C) 10 - 0,5 Gew.-% mindestens einer Verbindung mit mindestens einer Epoxidgruppe und mindestens einer anderen gegenüber Isocyanatgruppen reaktiven funktionellen Gruppe;
wobei die Polyadditionsverbindungen unterhalb von 40 °C in fester und oberhalb von 130 °C in flüssiger Form vorliegen, zahlenmittlere Molmassen zwischen 1 000 und 15 000 und einen Gehalt an freien Isocyanatgruppen (berechnet als NCO; Molekulargewicht = 42) von 0 bis 2 Gew.-% aufweisen, in einem Lösemittel bei 50 - 100 °C oder ohne Lösemittel in einem Intensivkneter bei 110 - 190 °C.

8. Transparente oder pigmentierte, abspaltfreie Polyurethan-Pulverlacke, im wesentlichen enthaltend Polyadditionsverbindungen nach mindestens einem der Ansprüche 1 bis 6 in Kombination mit hydroxylgruppenhaltigen Polymeren.

9. Polyurethan-Pulverlacke nach Anspruch 8 in Kombination mit Polyester-polyolen, Polyetherpolyolen, Polyesteramidpolyolen, Polyurethanpolyolen, hydroxylierten Acrylatharzen, Epoxidharzen mit Hydroxylgruppen im Molekül, Aminoplasten und ihre Modifizierungsprodukte mit polyfunktionellen Alkoholen, Polyazomethinen, Polysulfonamiden, Melaminabkömmlingen, Celluloseestern und -ethern.

10. Polyurethan-Pulverlacke gemäß Anspruch 9,
**dadurch gekennzeichnet,**
**daß** als hydroxylgruppenhaltige Polymere Polyester mit einer OH-Funktionalität von > 2, einer OH-Zahl von 20 bis 200 mg KOH/g, einer Viskosität bei 140 °C von < 60 000 mPa·s und einem Schmelzpunkt von 70 bis 120 °C eingesetzt werden.

11. Polyurethan-Pulverlacke gemäß Anspruch 9,
**dadurch gekennzeichnet,**
**daß** als hydroxylgruppenhaltige Polymere Acrylatharze mit einer OH-Zahl von 20 bis 150 mg KOH/g eingesetzt werden.

12. Polyurethan-Pulverlacke nach den Ansprüchen 8 bis 11,
**dadurch gekennzeichnet,**
**daß** diese weitere Zuschlags- und Hilfsstoffe enthalten.

13. Polyurethan-Pulverlacke nach den Ansprüchen 8 bis 12,
**dadurch gekennzeichnet,**
**daß** ein OH/NCO-Verhältnis von 1 : 0,6 bis 1 : 1,2 zugrunde liegt.

14. Polyurethan-Kunststoffe, enthaltend die Polyadditionsverbindungen der Ansprüche 1 - 6.

## Claims

1. An epoxy-terminated polyaddition compound containing uretdione groups, obtainable by reacting
A) 40 - 84.5% by weight of at least one polyisocyanate component synthesized from
1) at least 40% by weight of a polyisocyanate compound containing uretdione groups and having an average functionality of at least 2.0, and
2) not more than 60% by weight of at least one diisocyanate compound and/or isocyanurate compound without uretdione groups;
B) 50 - 15% by weight of at least one compound having at least two hydroxyl groups;
C) 10 - 0.5% by weight of at least one compound having at least one epoxy group and at least one other functional group which is reactive towards isocyanate groups;
said polyaddition compound being present in solid form below 40°C and in liquid form above 130°C, having a number-average molecular masses of between 1000 and 15,000, and a free isocyanate group content (calculated as NCO; molecular weight = 42) of from 0 to 2% by weight.

2. A polyaddition compound according to claim 1, **characterized in that** polyisocyanate compounds A1) containing uretdione groups and prepared from 1,6-diisocyanatohexane (HDI), 2-methylpentamethylene 1,5-diisocyanate (DI 51), 2,2,4(2,4,4)-trimethylhexamethylene diisocyanate, 4,4'-diisocyanatodicyclohexylmethane, 1,3- and 1,4-diisocyanatocyclohexane, isophorone diisocyanate (IPDI), or mixtures of such diisocyanates, are used.

3. A polyaddition compound according to either of claims 1 and 2, **characterized in that** diisocyanates and/or isocyanurates A2) selected from 1,6-diisocyanatohexane (HDI), 2-methylpentalmethylene 1, 5-diisocyanate (DI 51), 2,2,4(2,4,4)-trimethylhexamethylene diisocyanate, 4,4'-diisocyanatodicyclohexylmethane, 1,3- and 1,4-diisocyanatocyclohexane and isophorone diisocyanate (IPDI), or mixtures, are used.

4. A polyaddition compound according to at least one of claims 1 to 3, **characterized in that** diols selected from ethylene glycol, triethylene glycol, 1,4-butanediol, 1,5-pentanediol, 1,6-hexanediol, 3-methyl-1,5-pentanediol, neopentyl glycol, 2,2,4(2,4,4)-trimethylhexanediol and neopentyl glycol hydroxypivalate, alone or in mixtures, are used as compounds B).

5. A polyaddition compound according to at least one of claims 1 to 4, **characterized in that** compounds B) selected from linear hydroxyl-containing polyesters, polycarbonates, polycaprolactones, polyethers, polythioethers, polyesteramides, polyurethanes, and polyacetals, alone or in mixtures, are used.

6. A polyaddition compound according to at least one of claims 1 to 5, **characterized in that** 2,3-epoxy-1-propanol and/or epoxidized soybean oil are used as component C).

7. A process for preparing an epoxy-terminated polyaddition compound containing uretdione groups by reacting
A) 40 - 84.5% by weight of at least one polyisocyanate component synthesized from
1) at least 40% by weight of a polyisocyanate compound containing uretdione groups and having an average functionality of at least 2.0, and
2) not more than 60% by weight of at least one diisocyanate compound and/or isocyanurate compound;
B) 50 - 15% by weight of at least one compound having at least two hydroxyl groups;
C) 10 - 0.5% by weight of at least one compound having at least one epoxy group and at least one other functional group which is reactive towards isocyanate groups;
said polyaddition compound being present in solid form below 40°C and in liquid form above 130°C, having a number-average molecular masses of between 1000 and 15,000, and a free isocyanate group content (calculated as NCO; molecular weight = 42) of from 0 to 2% by weight, in a solvent at 50 - 100°C or without solvent in an intensive kneading apparatus at 110 - 190°C.

8. A transparent or pigmented polyurethane powder coating material free of elimination products, essentially comprising polyaddition compounds according to at least one of claims 1 to 6 in combination with hydroxyl-containing polymers.

9. A polyurethane powder coating material according to claim 8 in combination with polyester polyols, polyether polyols, polyesteramide polyols, polyurethane polyols, hydroxylated acrylate resins, epoxy resins with hydroxyl groups in the molecule, amino resins and their modification products with polyfunctional alcohols, polyazomethines, polysulphonamides, melamine derivatives, cellulose esters, and cellulose ethers.

10. A polyurethane powder coating material according to claim 9, **characterized in that** polyesters having an OH functionality of > 2, an OH number of from 20 to 200 mg KOH/g, a viscosity at 140°C of < 60,000 mPa·s, and a melting point of from 70 to 120°C are used as hydroxyl-containing polymers.

11. A polyurethane powder coating material according to claim 9, **characterized in that** acrylate resins having an OH number of from 20 to 150 mg KOH/g are used as hydroxyl-containing polymers.

12. A polyurethane powder coating material according to any of claims 8 to 11, **characterized in that** it comprises further additives and auxiliaries.

13. A polyurethane powder coating material according to any of claims 8 to 12, **characterized in that** it is based on an OH/NCO ratio of from 1:0.6 to 1:1.2.

14. A polyurethane polymer comprising a polyaddition compound of any of claims 1 - 6.

## Revendications

1. Composés de polyaddition comportant des groupes uretdiones, à terminaison époxyde, pouvant être obtenus par réaction de :
A) 40 - 84, 5 % en poids d'au moins un composant polyisocyanate, qui est constitué de :
1. au moins 40 % en poids d'un composé polyisocyanate comportant des groupes uretdiones, présentant une fonctionnalité moyenne d'au moins 2,0, et
2. au maximum 60 % en poids d'au moins un composé diisocyanate et/ou d'un composé isocyanurate sans groupes uretdiones ;
B) 50 - 15 % en poids d'au moins un composé comportant au moins deux groupes hydroxyles,
C) 10 - 0,5 % en poids d'au moins un composé comportant au moins un groupe époxyde et au moins un autre groupe fonctionnel réactif vis-à-vis des groupes isocyanates,
D) les composés de poly-addition se trouvant en dessous des 40°C sous forme solide et, au-dessus de 130°C sous forme liquide, et présentant des masses moléculaires moyennes entre 1.000 et 15,000 et une teneur en groupes isocyanates libres (calculée en NCO ; poids moléculaire = 42) de 0 à 2 % en poids.

2. Composés de polyaddition selon la revendication 1,
**caractérisés en ce qu'**
on utilise des composés polyisocyanates comportant des groupes uretdiones A1), préparés à partir de 1,6-diisocyanatohexane (HDI), 2-méthylpentaméthylènediisocyanate -1,5 (DI 51), 2,2,4 (2,4,4)-triméthylhexaméthylènediisocyanate, 4,4'-diisocyanatodicyclohexyl-méthane, 1,3- et 1,4-diisocyanatocyclohexanes et diisocyanate d'isophorone (IDPI), ou des mélanges de ces diisocyanates.

3. Composés de polyaddition selon au moins l'une des revendications 1 ou 2,
**caractérisés en ce qu'**
on utilise des diisocyanates et/ou des isocyanurates A2), choisis parmi le 1,6-diisocyanatohexane (HDI), le 2-méthylpentaméthylènediisocyanate-1,5 (DI 51), le 2,2,4 (2,4,4)-triméthylhexaméthylènediisocyanate, le 4,4'-diisocyanatodicyclohexylméthane, les 1,3- et 1,4-diisocyanatocyclohexanes et le diisocyanate d'isophorone (IPDI), ou leurs mélanges.

4. Composés de polyaddition selon au moins l'une des revendications 1 à 3,
**caractérisés en ce que**
comme composés B) on utilise des diols, choisis parmi l'éthylène glycol, le triéthylène glycol, le butanediol-1,4, le pentanediol-1,5, l'hexanediol-1,6, le 3-méthyl-pentanediol-1,5, le néopentylglycol, le 2,2,4 (2,4,4)-triméthylhexanediol et l'ester néopentylglycolique de l'acide hydroxypivalique, seuls ou en mélanges.

5. Composés de polyaddition selon au moins l'une des revendications 1 à 4,
**caractérisés en ce qu'**
on utilise des composés B) choisis parmi des polyesters contenant des groupes hydroxyle linéaires, des polycarbonates, des polycaprolactones, des polyéthers, des polythioéthers, des polyestéramides, des polyuréthannes ou des polyacétals, seuls ou en mélanges.

6. Composés de polyaddition selon au moins une des revendications 1 à 5,
**caractérisés en ce qu'**
on utilise le 2,3-époxy-1-propanol et/ou l'huile de soja époxydée comme composant C).

7. Procédé pour la préparation de composés de polyaddition contenant des groupes uretdiones, à terminaison époxyde, par réaction de
A) 40 - 84, 5 % en poids d'au moins un composant polyisocyanate, qui est constitué de :
1) au moins 40 % en poids d'un composé polyisocyanate comportant des groupes uretdiones, présentant une fonctionnalité moyenne d'au moins 2,0, et
2) au maximum 60 % en poids d'au moins un composé diisocyanate et/ ou d'un composé isocyanurate ;
B) 50 - 15 % en poids d'au moins un composé comportant au moins deux groupes hydroxyles ;
C) 10 - 0,5 % en poids d'au moins un composé comportant au moins un groupe époxyde et au moins un autre groupe fonctionnel réactif vis-à-vis des groupes isocyanate ;
les composés de polyaddition se trouvant, en dessous des 40°C, sous forme solide et, au-dessus de 130°C, sous forme liquide, et présentant des masses moléculaires moyennes entre 1.000 et 15.000 et une teneur en groupes isocyanate libres (calculée en NCO ; poids moléculaire = 42) de 0 à 2 % en poids, dans un solvant à 50 - 100°C ou sans solvant, dans un malaxeur intensif à 110 - 190°C.

8. Vernis en poudre au polyuréthanne exempts d'asphalte, transparents ou pigmentés, contenant essentiellement des composés de polyaddition selon au moins l'une des revendications 1 à 6, en combinaison avec des polymères contenant des groupes hydroxyles.

9. Vernis en poudre au polyuréthanne selon la revendication 8, en combinaison avec des polyols de polyesters, des polyols de polyéthers, des polyols de polyesteramides, des polyols de polyuréthanne, des résines acrylates hydroxylées, des résines époxydes avec des groupes hydroxyle dans la molécule, des aminoplastes et leurs produits de modification avec des alcools polyfonctionnels, des polyazométhines, des polysulfonamides, des dérivés de mélamine, des esters et des éthers de cellulose.

10. Vernis en poudre au polyuréthanne selon la revendication 9,
**caractérisés en ce qu'**
on utilise, comme polymères contenant des groupes hydroxyles, des polyesters présentant une fonctionnalité OH supérieure à 2, un indice d'OH de 20 à 200 mg de KOH/g, une viscosité à 140°C inférieure à 60.000 mPa.s et un point de fusion de 70 à 120°C.

11. Vernis en poudre au polyuréthanne selon la revendication 9,
**caractérisés en ce qu'**
on utilise, comme polymères contenant des groupes hydroxyles, des résines acrylates présentant un indice d'OH de 20 à 150 mg de KOH/g.

12. Vernis en poudre au polyuréthanne selon les revendications 8 à 11,
**caractérisés en ce que**
ceux-ci contiennent d'autres additifs et adjuvants.

13. Vernis en poudre au polyuréthanne selon les revendications 8 à 12,
**caractérisés en ce qu'**
ils sont basés sur un rapport OH/NCO de 1/0,6 à 1/1,2.

14. Matières plastiques au polyuréthanne, contenant les composés de polyaddition des revendications 1 à 6.
